# EUROPÄISCHE PATENTSCHRIFT

(11) **EP 1 261 048 B1**
(45) Veröffentlichungstag und Bekanntmachung des Hinweises auf die Patenterteilung: **21.12.2011**
(21) Anmeldenummer: 02009821.6
(22) Anmeldetag: 02.05.2002
(51) Int. Cl.: H01M 4/02, H01M 4/48, H01M 4/52, H01M 4/04

(54) **Elektroden/Separator-Laminat für galvanische Elemente und Verfahren zur dessen Herstellung**
Electrode/Separator Laminate for galvanic cells and and process for its manufacture
Électrode/séparateur laminé pour éléments galvaniques et et son procédé de fabrication

(30) Priorität: 25.05.2001 DE 10125616
(43) Veröffentlichungstag der Anmeldung: 27.11.2002
(73) Patentinhaber: VARTA Microbattery GmbH, 73479 Ellwangen (DE); VOLKSWAGEN VARTA Microbattery Forschungsgesellschaft mbH & Co. KG, 73479 Ellwangen (DE)
(72) Erfinder: Wöhrle, Thomas, Dr., 73479 Ellwangen (DE); Holl, Konard, Dr., 73434 Aalen-Dewangen (DE); Birke, Peter, Dr., 73479 Ellwangen (DE); Ilic, Dejan, Dr., 73479 Ellwangen (DE); Stelzig, Heinrich, 73494 Rosenberg (DE)
(74) Vertreter: Patentanwälte Ruff, Wilhelm, Beier, Dauster & Partner

(56) Entgegenhaltungen:
- EP-A- 1 005 099
- US-A- 5 296 318
- US-A- 5 460 904

## Beschreibung

Gegenstand der Erfindung ist ein Verfahren zur Herstellung eines Elektroden / Separator-Laminats für galvanische Elemente, die mindestens eine lithium-interkalierende Elektrode enthalten, welche aus einem PVDF-HFP-Copolymer besteht, in deren Polymermatrix im Polymer unlösliche elektrochemisch aktive Materialien fein dispergiert sind. Weiterhin betrifft die Erfindung galvanische Elemente mit so hergestellten Elektroden.

Die Haftung zwischen Elektrodenmaterial und Separator sowie zwischen Elektroden und der jeweiligen Ableiterfolie ist für die Funktionsfähigkeit galvanischer Elemente von besonderer Bedeutung. Ein Kontaktverlust kann elektrochemisch aber auch als einfache Dekontaktierung durch Quellen der Elektroden im Elektrolyten oder durch Gasung als Folge von Zersetzung eintreten. Vorteilhaft dabei sind laminierte Zellen, da bei diesen kein spontaner Kontaktverlust durch Gasung eintreten und aufgrund des Formfaktors eine hohe Energiedichte erreicht werden kann. Ein Laminat ist aufgrund seines Herstellungsverfahrens auch gegen Quellung resistenter.

Die Verwendung von Polymerelektrolyten aus einem Film aus einem Copolymer von Polyvinylidendifluorid-Hexafluorpropylen und einem darin verteilten Lithiumsalz als Leitsalz ist dem US-Patent 5 296 318 zu entnehmen. Der HFP-Anteil im Copolymer soll demgemäss zwischen 8 und 25 Gewichtsprozent liegen. Auch in der EP 1 005 099 sind Polymerelektrolyten auf Basis von einem PVDF-HFP-Copolymer beschrieben.

Dem US-Patent 5 460 904 sind Lithium-interkalierende Elektroden zu entnehmen, bei denen die aktive Masse in einer Matrix aus Polyvinylidendifluorid-Hexafluorpropylen-Copyolymer verteilt ist. Zwischen diesen Elektroden ist ein aus den gleichen Materialien hergestellter Gel-Separator angeordnet, der einen Weichmacher, insbesondere Dibutylphtalat, enthält, der anschließend herausgelöst werden. Der HFP-Anteil in Gelelektrolyt und in den Elektrodenfolien liegt jeweils zwischen 8 bis 25 Gewichtsprozent.

Nachteilig bei diesem Verfahren zur Herstellung von Zellen ist das notwendige Herauslösen des Weichmachers. Darüber hinaus entsteht ein sehr weicher Separator, der bei der Herstellung leicht durchlaminiert werden kann, was zu Kurzschlüssen in der Zelle führt. Daher sind dickere Separatorschichten notwendig, was die Energiedichte herabsetzt. Darüber hinaus ist der im Separator vorhandene SiO₂-Anteil in Verbindung mit Lithiumelektroden nicht dauerstabil.

Der Erfindung liegt daher die Aufgabe zugrunde, ein Verfahren zur Herstellung von einem Elektroden/ Separator-Laminat der eingangs genannten Art anzugeben, welches einfach durchführbar ist, bei denen eine gute Kontaktierung zwischen Separatormaterial und Elektrodenmaterial vorhanden ist und welche zu Zellen zusammenbaubar sind, welche hohe Energiedichten besitzen.

Diese Aufgabe wird bei einem Verfahren der eingangs genannten Art durch die kennzeichnenden Merkmale des Anspruchs 1 gelöst. In den Unteransprüchen sind vorteilhafte Ausgestaltungen des Verfahrens angegeben.

Des weiteren ist das galvanische Element mit den Merkmalen des Anspruchs 10 von der vorliegenden Erfindung umfasst.

Der niedrige HFP-Anteil in der PVdF-HFP-Zusammensetzung liefert insbesondere eine gute Anbindung des positiven Elektrodenmaterials an eine Aluminiumableiterfolie und es hat sich gezeigt, dass die nur halbleitenden oxidischen Partikel des aktiven Materials mit derart geringen Mengen an HFP im Polymer besser ankontaktieren. Darüber hinaus wird durch die Verringerung des HFP-Anteils die Prozesseigenschaft verbessert. Das Mischen der aktiven Materialien sowie das gleichmäßige Ausziehen zu einer Folie und deren Laminationsfähigkeit wird verbessert. Durch den Einsatz eines Polyolefin-basierten Separators, der mit PVDF-HFP-Copolymer beschichtet ist, lässt sich leicht eine gute Anbindung zwischen Elektrodenmaterial und Separator erzielen.

Als Lösungsmittel bei der Herstellung der Elektroden und der Beschichtungsmaterialien für den Polyolefin-Separator werden beispielsweise N-Methylpyrolidin-2-on oder Aceton verwendet. Der HFP-Anteil im PVDF-HFP-Copolymer in der negativen und in der positiven Elektrode kann unterschiedlich sein. Typische Vertreter sind Solef 20615 mit 6 Gew.-% HFP und Kynar Powerflex mit 5-6 Gew.-% HFP.

Das elektrochemisch aktive Material der positiven Elektrodenfolie ist ein Material aus der Gruppe ternärer Li-Me1-O oder quaternärer Li-Me1-Me2-O Lithiumsübergangsmetalloxide , wobei Me1 und Me2 aus der Gruppe Ti, V, Cr, Fe, Mn, Ni, Co ausgewählt sind und die Verbindung gegebenenfalls zusätzlich bis zu 15 Atomprozent Mg, Al, N oder zur Stabilisierung der Struktur enthält.

Das elektrochemisch aktive Material dieser positiven Elektrode kann eine BET-Oberfläche von 0,1 bis 2 m² / g und eine Partikelgröße von 1 bis 50 µm besitzen. Insbesondere wird als Material der positiven Elektrode LiCoO₂ verwendet, mit einem Verhältnis Li/Co von 0,98 bis 1,05. Die Pastenmischung für die Herstellung positiver Elektrodenfolien sollte 65 bis 98 Gewichtsprozent, vorzugsweise 75 bis 95 Gewichtsprozent eine Lithiumübergangsmetalloxids enthalten.

Die negative Elektrodenfolie enthält als elektrochemisch aktives Material insbesondere graphitisierte Kohlenstoffmodifikationen. Die Pastenmischung zur Herstellung negativer Elektrodenfolien enthält 55 bis 95 Gewichtsprozent, vorzugsweise 65 bis 85 Gewichtsprozent, Kohlenstoffmaterial.

Die Pastenmischungen zur Herstellung von solchen Elektrodenfolien enthält im allgemeinen 50 bis 75 Gewichtsprozent, vorzugsweise 55 bis 65 Gewichtsprozent Lösungsmittel. Die Viskosität der Ausgangspaste wird auf 1 bis 10 Pascal, insbesondere 3 bis 6 Pascal eingestellt.

### Beispiel:

Für die Herstellung einer Kathode werden 9,9 g Binderpolymer (Kynar Powerflex®), 94 g LiCoO₂, 3,3 g Leitruß (Super P), 3,3 g Graphit (KS 6) und 16,5 g Dibuthylphtalat in Aceton eingetragen und die erhaltene Beschichtungsmasse mittels einem halbautomatischen Filmziehgerät (Simex) auf einer Trägerfolie ausgerakelt. Der entstandene, freistehende, positive Massefilm wird anschließend auf Streckmetall (2Al6-077F, Delker) laminiert, so dass das Streckmetall mittig ist.

Zur Herstellung einer Anode werden 12,4 g Binderpolymer (SOLEF 20615®), 96,2 g Kugelgraphit (MCMB), 2,75 g Leitruß (Super P), und 26,1 g Dibuthylphtalat in Aceton eingetragen und die erhaltene Beschichtungsmasse mittels einem halbautomatischen Filmziehgerät (Simex) auf einer Trägerfolie ausgerakelt. Der entstandene, freistehende negative Massefilm wird anschließend auf Streckmetall (2Cu6-077F+A, Delker) laminiert, so dass das Streckmetall mittig ist.

Ein handelsüblicher Polyolefin-Separator wird mit einer Lösung aus P(VdF-HFP) und gegebenenfalls einem Weichmacher wie Dibuthylphtalat in Aceton mit einer Airbrush-Pistole beschichtet, so dass nach Verdunsten des Acetons die Trockendicke ca. 1-2 µm beträgt.

Zwei laminierte Kathodenverbände, ein beidseitig beschichteter Separator und ein laminierter Anodenverbund werden zu einer symmetrischen Zelle laminiert. Sechs so erhaltene Zellen werden zu einem Stack gestapelt und die Ableiter geschweißt. Nach dem Austausch des Weichmachers durch einen organischen Lithium-Elektrolyten (LP 50, Merck) und anschließender Verpackung in doppelseitig beschichteter Aluminium-Verbundfolie (Lawson Mardon, USA) werden diese Stacks formiert, entgast und bei Raumtemperatur bei 1C gezykelt.

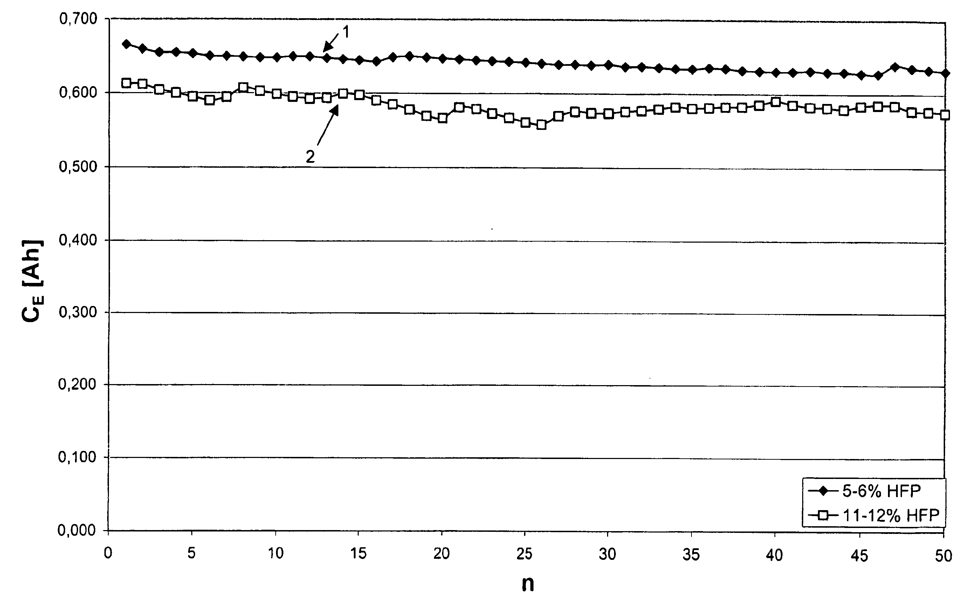

In der Figur ist die Kapazität eines 6-Bizellen-Stapels in Abhängigkeit von der Zyklenzahl n bei Entladung (C_{E}) mit einem Strom in der Größe 1C (750 mA) im Bereich 3,0 bis 4,2 Volt dargestellt (bei Raumtemperatur) (Kurve 1).

Kurve 2 zeigt im Vergleich dazu die Kapazität eines 6-Bizellen-Stapels, bei dem ein Trägerpolymer mit 11-12 Gew-% HFP zum Einsatz kam.

Die besonderen Vorteile, die durch die Verwendung von HFP-Anteilen, die gewichtsmäßig unter 8 % liegen und die Verwendung eines Polyolefin-Separators, der mit einer gleichen Polymermischung beschichtet wird, liegen darin, dass ein Zellverbund mit optimaler Haftung über die Grenzflächen erzielt wird. Solche Zellen zeigen erheblich erhöhte Belastbarkeit und verbesserte Zyklenstabilität.

## Patentansprüche

1. Verfahren zur Herstellung eines Elektroden/Separator-Laminats für galvanische Elemente, die mindestens eine lithiuminterkalierende Elektrode enthalten, welche aus einem PVDF-HFP-Copolymer besteht, in dessen Polymermatrix im Polymer unlösliche elektrochemisch aktive Materialien fein dispergiert sind, **dadurch gekennzeichnet, dass**
- das PVDF-HFP-Copolymer, gelöst in einem Lösungsmittel, mit elektrochemisch aktiven Materialien vermischt wird,
- die so erhaltene pastöse Masse zu einer Folie ausgezogen und
- anschließend mit einem Polyolefin-Separator verlaminiert wird, der mit dem PVDF-HFP-Copolymer beschichtet ist,
wobei jeweils ein PVDF-HFP-Colpolymer verwendet wird, dessen HFP Anteil kleiner als 8 Gewichtsprozent ist.

2. Verfahren nach Anspruch 1, **dadurch gekennzeichnet, dass** als Lösungsmittel N-Methylpyrrolidin-2-on (NMP) oder Aceton verwendet werden.

3. Verfahren nach Anspruch 1 oder 2, **dadurch gekennzeichnet, dass** der PVDF-HFP-Anteil in der negativen und der positiven Elektrode unterschiedlich ist.

4. Verfahren nach einem der Ansprüche 1 bis 3, **dadurch gekennzeichnet, dass** als elektrochemisch aktives Material für eine positive Elektrodenfolie ein Material aus der Gruppe ternärer (Li-Me1-O) oder quaternärer (Li-Me1-Me2-O) Lithiumübergangsmetalloxide, wobei Me1 und Me2 aus einer Gruppe Ti, V, Cr, Fe, Mn, Ni, Co ausgewählt sind, verwendet wird und die Verbindung gegebenenfalls zusätzlich bis zu 15 Atom-Prozent Mg, Al, N oder F zur Stabilisierung der Struktur enthält.

5. Verfahren nach einem der Ansprüche 1 bis 4, **dadurch gekennzeichnet, dass** als elektrochemisch aktives Material der negativen Elektrodenfolie eine graphitisierte Kohlenstoffmodifikation verwendet wird.

6. Verfahren nach einem oder mehreren der Ansprüche 1 bis 5, **dadurch gekennzeichnet, dass** als aktives Material der positiven Elektrodenfolie ein Material mit einer BET-Oberfläche von 0,1 - 2 m²/g und einer Partikelgröße von 1 bis 50 µm verwendet wird.

7. Verfahren nach einem oder mehreren der Ansprüche 1 bis 6, **dadurch gekennzeichnet, dass** als Material der positiven Elektrode LiCoO₂ verwendet wird, mit einem Verhältnis Li/Co von 0,98 bis 1,05.

8. Verfahren nach einem oder mehreren der Ansprüche 1 bis 7, **dadurch gekennzeichnet, dass** die Pastenmischung für negative E-lektrodenfolien zwischen 55 and 95 Gew.-% und vorzugsweise 65 bis 85 Gew.-% an Kohlenstoffmaterial enthält.

9. Verfahren nach einem oder mehreren der Ansprüche 1 bis 8, **dadurch gekennzeichnet, dass** die Pastenmischung für positive E-lektrodenfolien zwischen 65 bis 98 Gew.-%, vorzugsweise 75 bis 95 Gew.-% eines Lithiumübergangsmetalloxids enthält.

10. Galvanisches Element mit mindestens einem Elektroden/Separator-Laminat, das nach einem Verfahren gemäß einem der Ansprüche 1 bis 9 hergestellt ist.

## Claims

1. A method for producing an electrode/separator laminate for electrochemical elements which contains at least one lithium-intercalating electrode which is composed of a PVDF-HFP copolymer, where in the polymer matrix electrochemically active materials, which are insoluble in the polymer, are finely dispersed,
**characterized in that**
- the PVDF-HFP copolymer, dissolved in a solvent, is mixed with electrochemically active materials,
- the pasty substance obtained in this way is extruded to form a sheet, and
- is then laminated with a polyolefin separator, which is coated with the PVDF-HFP copolymer,
where in each case a PVDF-HFP copolymer is used having a proportion of HFP less than 8 percent by weight.

2. The method as claimed in claim 1, **characterized in that** N-methyl-2-pyrrolidone (NMP) or acetone is used as the solvent.

3. The method as claimed in claim 1 or 2, **characterized in that** the proportion of PVDF-HFP in the negative electrode and in the positive electrode is different.

4. The method as claimed in any of claims 1 to 3, **characterized in that** a material from the group of ternary (Li-Me1-O) or quaternary (Li-Me1-Me2-O) lithium transitional metal oxides is used as the electrochemically active material for the positive electrode sheet, with Me1 and Me2 being selected from a group consisting of Ti, V, Cr, Fe, Mn, Ni, Co, and with the compound additionally containing, if required, up to 15 percent by atomic weight of Mg, Al, N or F in order to stabilize the structure.

5. The method as claimed in any of claims 1 to 4, **characterized in that** a graphitized carbon modification is used as the electrochemically active material for the negative electrode sheet.

6. The method as claimed in any or more of claims 1 to 5, **characterized in that** a material with a BET surface area of 0.1 to 2 m²/g and a particle size of 1 to 50 µm is used as the active material for the positive electrode sheet.

7. The method as claimed in any or more of claims 1 to 6, **characterized in that** LiCoO₂, with a Li/Co ratio of 0.98 to 1.05, is used as the material for the positive electrode.

8. The method as claimed in any or more of claims 1 to 7, **characterized in that** the paste mixture for negative electrode sheets contains 55 to 95 percent by weight, and preferably 65 to 85 percent by weight, of carbon material.

9. The method as claimed in any or more of claims 1 to 8, **characterized in that** the paste mixture for positive electrode sheets contains 65 to 98 percent by weight, and preferably 75 to 95 percent by weight, of a lithium transitional metal oxide.

10. An electrochemical element having at least one electrode/separator laminate which is produced using a method as claimed in any of claims 1 to 9.

## Revendications

1. Procédé de fabrication d'un stratifié électrode-séparateur pour éléments galvaniques qui contiennent au moins une électrode intercalaire au lithium constituée d'un copolymère de PVDF et de HFP dans la matrice duquel des matériaux insolubles et électrochimiquement actifs sont finement dispersés,
**caractérisé en ce que**
le polymère de PVDF et de HFP dissous dans un solvant est mélangé avec des matériaux électrochimiquement actifs,
**en ce que** la pâte ainsi obtenue est étirée en un film et
**en ce qu'**elle est ensuite stratifiée avec un séparateur de polyoléfines qui est recouvert du copolymère de PVDF et de HFP,
le procédé utilisant un copolymère de PVDF et de HFP dont la teneur en HFP est inférieure à 8 pour cent en poids.

2. Procédé selon la revendication 1, **caractérisé en ce qu'**il utilise comme solvant la N-méthylpyrrolidin-2-one (NMP) ou l'acétone.

3. Procédé selon la revendication 1 ou 2, **caractérisé en ce que** les teneurs en PVDF-HFP dans l'électrode négative et dans l'électrode positive sont différentes.

4. Procédé selon l'une des revendications 1 à 3, **caractérisé en ce que** comme matériau électrochimiquement actif pour un film d'électrode positive, il utilise un matériau sélectionné dans l'ensemble constitué des oxydes ternaires de lithium et de métal de transition (Li-Mel-O) et des oxydes quaternaires de lithium et de métaux de transition (Li-Mel-Me2-O), Me1 et Me2 étant sélectionnés dans l'ensemble constitué de Ti, V, Cr, Fe, Mn, Ni et Co, et **en ce que** le composé contient éventuellement en plus jusqu'à 15 pour cent atomiques de Mg, Al, N ou F qui stabilisent sa structure.

5. Procédé selon l'une des revendications 1 à 4, **caractérisé en ce que** comme matériau électrochimiquement actif du film d'électrode négative, il utilise une variante graphitée du carbone.

6. Procédé selon l'une ou plusieurs des revendications 1 à 5, **caractérisé en ce que** comme matériau actif du film d'électrode positive, il utilise un matériau dont la surface BET est de 0,1 à 2 m²/g et dont les particules ont une taille comprise entre 1 et 50 µm.

7. Procédé selon l'une ou plusieurs des revendications 1 à 6, **caractérisé en ce que** comme matériau d'électrode positive, il utilise du LiCoO₂ dont le rapport Li/Co est compris entre 0,98 et 1,05.

8. Procédé selon l'une ou plusieurs des revendications 1 à 7, **caractérisé en ce que** le mélange pâteux prévu pour le film d'électrode négative contient entre 55 et 95 % en poids et de préférence entre 65 et 85 % en poids d'un matériau à base de carbone.

9. Procédé selon l'une ou plusieurs des revendications 1 à 8, **caractérisé en ce que** le mélange pâteux prévu pour le film d'électrode positive contient entre 65 et 98 % en poids et de préférence de 75 à 95 % en poids d'un oxyde de lithium et de métal de transition.

10. Elément galvanique présentant au moins un stratifié électrode-séparateur fabriqué à l'aide d'un procédé selon l'une des revendications 1 à 9.
